# EUROPEAN PATENT SPECIFICATION

(11) **EP 3 876 740 B1**
(45) Date of publication and mention of the grant of the patent: **29.10.2025**
(21) Application number: 19798650.8
(22) Date of filing: 08.11.2019
(51) Int. Cl.: A23C 9/12, A23C 19/032

(54) **REDUCTION OF MICROBIAL CONTAMINATION IN DAIRY PRODUCTS BY PHOSPHOLIPASE**
VERRINGERUNG DER MIKROBIELLEN KONTAMINATION IN MILCHPRODUKTEN DURCH PHOSPHOLIPASE
RÉDUCTION DE LA CONTAMINATION MICROBIENNE DANS DES PRODUITS LAITIERS PAR PHOSPHOLIPASE

(30) Priority: 09.11.2018 EP 18205319
(43) Date of publication of application: 15.09.2021
(73) Proprietor: Chr. Hansen A/S, 2970 Hoersholm (DK)
(72) Inventor: ROUSTEL, Sebastien, 2970 Hoersholm (DK); SAITO, Michael Mitsuo, 13278-327 Valinhos/SP (BR)
(74) Representative: NVS EPO Representatives
(86) International application number: PCT/EP2019/080671
(87) International publication number: WO 2020/094839

(56) References cited:
- US-A1- 2008 220 123
- US-A1- 2011 117 241
- N. TRANCOSO-REYES ET AL: "Assessing the yield, microstructure, and texture properties of miniature Chihuahua-type cheese manufactured with a phospholipase A1 and exopolysaccharide-producing bacteria", JOURNAL OF DAIRY SCIENCE., vol. 97, no. 2, 1 February 2014 (2014-02-01), US, pages 598 - 608, XP055579173, ISSN: 0022-0302, DOI: 10.3168/jds.2013-6624
- BAKHOLDINA S I ET AL: "Recombinant phospholipase A1of the outer membrane of psychrotrophicYersinia pseudotuberculosis: Expression, purification, and characterization", BIOCHEMISTRY, MAIK NAUKA - INTERPERIODICA, RU, vol. 81, no. 1, 2 February 2016 (2016-02-02), pages 47 - 57, XP035617226, ISSN: 0006-2979, [retrieved on 20160202], DOI: 10.1134/S0006297916010053

## Description

### FIELD OF THE INVENTION

The present invention relates to the use of phospholipase A1 (EC 3.1.1.32) in dairy products, in particular fresh dairy products and cheese products.

### BACKGROUND OF THE INVENTION

Gram-negative bacteria such as coliforms are among the many groups of microorganisms that are normally present in raw milk. They are common contaminants in cheeses and other dairy products. It is a well-known problem that all fresh dairy products with a higher pH are very sensitive to growth of coliforms.

High levels of coliforms in raw milk may indicate unsanitary practices on the farm, such as inadequate refrigeration. Therefore, coliform bacteria have been used as microbial hygiene indicators in the dairy industry.

Coliforms are aerobic or facultatively anaerobic, Gram negative, non-spore forming rods capable of fermenting lactose to produce gas and acid within 48 hours at 32 to 35°C. Coliform standards are included in regulatory documents (e.g., the U.S. Food and Drug Administration's Grade "A" Pasteurized Milk Ordinance). Most bacterial genera that comprise the coliform group are within the family *Enterobacteriaceae,* while at least one genus with strains recognized as coliforms, *Aeromonas,* is in the *family Aeromonadaceae.* Over 20 Gram-negative genera meet the phenotypic criteria of coliforms, including *Escherichia, Klebsiella, Citrobacter, Serratia* and *Enterobacter.*

The growth or death of coliforms in dairy products such as cheese depends on a variety of parameters such as cheese pH, age, moisture content, salt content, free fatty acid content and others. In particular, coliforms are prevalent in cheese with higher pH and higher water activity (Trmčić, A., et al. "Coliform detection in cheese is associated with specific cheese characteristics, but no association was found with pathogen detection." Journal of dairy science 99 (2016): 6105-6120).

Efforts aimed at improving hygiene and on-farm milk practices are recommended to reduce risks of foodborne disease. These include practices such as regular checks of animal health, testing of milk and the processing equipment and establishment to meet hygiene requirements, and the monitoring of critical points in the process such as temperature during cooling and transport.

One strategy to reduce the occurrence of Gram-negative bacteria such as coliforms in dairy products is pasteurization. For example, milk pasteurization before cheese production is carried out to kill at least 10⁵ colony-forming units (CFU)/g bacteria to ensure a safer product with an extended shelf life. However, pasteurization may affect the properties of the milk such as whey protein denaturation and subsequent interactions with kappa caseins. Milk pasteurization may also lead to insufficient flavor development in cheese, due to enzyme inactivation and loss of native microbial flora present in the milk.

Dairy products, such as cheese products, with a pH higher than 6.0 are very sensitive to the growth of coliforms and have therefore a very short shelf life. One such cheese is "Queso Fresco" originated from Latin American countries. It is a fresh, soft, white cheese that was traditionally made from raw cows' or goats' milk and has a mild, salty flavor with crumbly texture. Queso Fresco prepared from raw milk is meant to be consumed within 1 to 2 weeks after production due to formation contaminant microorganisms including bacteria, yeasts and molds. Queso Fresco prepared from pasteurized milk, on the other hand, has a shelf life shorter than 30 days, even when stored at a temperature lower than 6°C. Unwanted microorganism growth can lead to formation of gas and whey liquid as well as changes on texture and off flavor, thus making the product unconsumable.

In many cases, Queso fresco production is very manual, and the risk of post-contamination by coliform is high. The coliform count in the final product is often higher than 10⁴ CFU/g of product at the end of shelf life. It is not a surprise that Queso Fresco have been implicated in several food-borne outbreaks.

Using manufacturing practices such as good hygiene, it is possible to reduce the risk of contamination. In addition, high-pressure processing (HPP) of milk has been proposed for the process of making Queso Fresco (Sandra, S., M. A. Stanford, and L. Meunier Goddik. "The use of high-pressure processing in the production of queso fresco cheese." Journal of food science 69.4 (2004):153-158.). However, HPP treatment was found to lead to altered sensory profiles and decreased firmness, springiness, and crumbliness during storage as well as increased surface irregularities and oiliness appearance.

US8241690 discloses a method of preserving high moisture cheese by a preservative blend of sorbic acid, nisin and the enzyme system under the name of Sea-i^{®} from Bienca S.A (Belgium). Sea-i^{®} is based on lactoperoxidase system (LPS system) and described for example in EP3030096 (Bienca, Belgium), where a composition based on the LPS system, comprising lactoperoxidase, thiocyanate, glucose oxidase, and glucose, is disclosed. Glucose oxidase generates hydrogen peroxide based on oxidation of glucose.

As with peroxidases generally, lactoperoxidase (LP) catalyzes reactions in which hydrogen peroxide is reduced and a suitable electron donor is oxidized. LP itself has no antibacterial effect but in combination with certain substrates, thiocyanate and hydrogen peroxide, forms an antimicrobial system.

However, the possible toxicological effect of LPS and its constituent components are not fully surveyed. As an example, it has been recognized that the thiocyanate ion can interfere with iodine uptake. There is still a need for an effective strategy to inhibit unwanted microorganisms or to prolong the shelf life of dairy products, optimally without compromising the sensory profile and product appearance.

### SUMMARY OF THE INVENTION

The invention is as defined in the appended claims.

The present invention provides a new use of the enzyme phospholipase A1 (EC 3.1.1.32) in a process for preparing a dairy product, particularly a product with a pH which higher than 5.0 and a moisture content higher than 40%. As used herein and unless stated otherwise, the pH and moisture content mentioned in connection with the dairy products applicable in the present invention refer to the pH value and moisture content determined at the time as soon as the product is ready to be consumed after manufacture.

Moisture content is determined by IDF (International Dairy Federation) (1982) Determination of the Total Solids Content of Cheese and Processed Cheese. Standard FIL-IDF 4A: 1982. International Dairy Federation, Brussels, Belgium.

Dairy products with a pH which higher than 5.0 and a moisture content higher than 40% are prone to microbial contaminations, including contamination from Gram-negative bacteria (e.g. coliforms), yeast and molds, which may lead to foodborne diseases if not controlled. It has been surprisingly discovered that phospholipase A1 can be used to reduce the growth of Gram-negative bacteria, yeasts and molds in dairy products, particularly fresh dairy products with shorter shelf life.

Although not claimed as such, the present disclosure provides dairy products, preferably fresh dairy products, prepared from milk base, to which phospholipase A1 is added to inhibit microbial contaminations.

Phospholipases have been used in the dairy industry for stabilizing fat emulsion, improving fat stability, increasing yield, interesterification, flavor enhancement and aging acceleration (Casado, Victor, et al. "Phospholipases in food industry: a review." Lipases and Phospholipases. Humana Press, 2012. 495-523). They have also been used for degumming vegetable oils, increasing butter yield and modifying egg yolk. However, the use of phospholipases as bioprotective agents in dairy products to manage microbial contamination and to prolong shelf life has never been suggested.

The present invention provides use of phospholipase A1 (EC 3.1.1.32) to inhibit growth of Gram-negative bacteria (such as coliforms), yeasts and molds in products prepared from milk.

### BRIEF DESCRIPTION OF THE FIGURES

Figure 1 shows the acidification profile of the minas frescal cheese treated with and without phospholipase A1.
Figure 2 shows gas formation in the minas frescal cheese treated with phospholipase (Batch 1 and 2) and without phospholipase A1 (Batch 3 and 4).
Figure 3 shows the acidification profile of Queso Fresco cheese treated with (dotted) and without (dashed) phospholipase A1 during a period of 5 weeks.
Figure 4 shows that the moisture content of Queso Fresco cheese treated with (dotted) and without (dashed) phospholipase A1 during a period of 5 weeks.
Figure 5 shows the appearance of Queso Fresco cheese treated with (right) and without (left) phospholipase A1.
Figure 6 shows the mean log of coliforms in the Queso Fresco cheese treated with (right) and without (left) phospholipase A1 during a period of 5 weeks.
Figure 7 shows the coliform count plates for Queso Fresco cheese treated with (left) and without (right) phospholipase A1.
Figure 8 shows the effect on coalho cheese samples treated with (bottom) and without (top) phospholipase A1 when heated on grill.

### DETAILED DESCRIPTION OF THE INVENTION

A great challenge in the food processing industry is microbial contamination caused by bacteria and fungi. Of these, food-borne Gram-negative bacteria are of major concern, as they are capable of causing diseases or sickness. Chemical preservatives are traditionally used to control contamination during food processing. However, there is an ever-increasing societal demand for less processed or preservative-free foods.

The present invention is based, in part, on the surprising finding that phospholipase A1 has positive effects on reducing the microbial contamination in fresh dairy products. The inventors have surprisingly discovered that by adding phospholipase A1 (EC 3.1.1.32) during the process of preparation, it is possible to inhibit the growth of gram-negative bacteria, yeasts and molds, thereby prolonging the shelf life of the products. This finding allows the need to use chemical preservatives to be reduced or eliminated.

The present invention is related to the use of phospholipase A1 (EC 3.1.1.32) as an effective bioprotective strategy for dairy products that are susceptible to microbial contamination by Gram-negative bacteria, yeasts and molds.

Phospholipases are fundamental enzymes that play a crucial role in living organisms in general and in the metabolism and biosynthesis of phospholipids. The enzymes participate in the hydrolysis of phospholipids, and several types of phospholipase activities can be distinguished, including phospholipase A, B, C and D. Phospholipase A can further be classified as phospholipase A1 (EC 3.1.1.32) or A2 (EC 3.1.1.4.), which hydrolyze one fatty acyl group (in the sn-1 and sn-2 position, respectively) to form lysophospholipid. Phospholipase A1 has a much broader specificity than A2. Phospholipase A1 is defined according to standard enzyme EC-classification as EC 3.1.1.32:
Official Name: phospholipase A1
Reaction catalyzed: phosphatidylcholine + water <=> 2-acylglycerophosphocholine + a fatty acid anion.

Phospholipase A1 used in the present application may be of any origin, e.g. of animal origin (such as, e.g. mammalian), e.g. from pancreas (e.g. bovine or porcine pancreas), or snake venom or bee venom. Alternatively, the phospholipase may be of microbial origin, e.g. from filamentous fungi, yeast or bacteria, , such as the genus or species *Aspergillus,* e.g. *A. niger; Dictyostelium,* e.g. *D. discoideum; Mucor,* e.g. *M. javanicus, M. mucedo, M. subtilissimus; Neurospora,* e.g. *N. crassa; Rhizomucor,* e.g. *R. pusillus; Rhizopus,* e.g. *R. arrhizus, R. japonicus, R. stolonifer; Sclerotinia,* e.g. *S. libertiana; Trichophyton,* e.g. *T. rubrum; Whetzelinia,* e.g. *W. sclerotiorum; Bacillus,* e.g. *B*. *megaterium, B. subtilis; Citrobacter,* e.g. *C. freundii; Enterobacter,* e.g. *E. aerogenes, E. cloacae Edwardsiella, E. tarda; Erwinia,* e.g. *E. herbicola; Escherichia,* e.g. *E. coli; Klebsiella,* e.g. *K. pneumoniae; Proteus,* e.g. *P. vulgaris; Providencia,* e.g. *P. stuartii; Salmonella,* e.g. *S*. *typhimurium; Serratia,* e.g. *S*. *liquefasciens, S. marcescens; Shigella,* e.g. *S. flexneri; Streptomyces,* e.g. *S*. *violeceoruber; Yersinia,* e.g. *Y. enterocolitica.* The phospholipase may be fungal, e.g. from the class *Pyrenomycetes,* such as the genus *Fusarium,* such as a strain of *F. culmorum, F. heterosporum, F. solani, F. venenatum,* or a strain of *F. oxysporum.* The phospholipase may also be from a filamentous fungus strain within the genus *Aspergillus,* such as a strain of *Aspergillus awamori, Aspergillus foetidus, Aspergillus japonicus, Aspergillus niger* or *Aspergillus oryzae.* A preferred phospholipase is derived from a strain of *Fusarium,* particularly from *F. venenatum* or *F. oxysporum,* e.g. from strain DSM 2672 as described in WO 98/26057, especially described in claim 36 of WO 98/26057. In further embodiments, the phospholipase is a phospholipase as disclosed in WO 00/32758 (Novozymes A/S, Denmark).

Phospholipases are commercially available. Phospholipase A1 from *Thermomyces lanuginosus*/*Fusarium oxysporum* expressed in *Aspergillus oryzae* is available under the trademark Lecitase^{®}Ultra (Novozymes A/S, Denmark). Another preferred phospholipase A1 is available under the trademark YieldMAX^{®} or YieldMAX^{®}PL (Chr. Hansen A/S, Denmark), produced from submerged fermentation of an *Aspergillus oryzae* strain. Another preferred phospholipase is phospholipase A1 from *Fusarium* spp.

Other food-grade phospholipases are well known to a skilled person in the art and can be found for example in Casado, Victor, et al. "Phospholipases in food industry: a review." Lipases and Phospholipases: Methods and Protocols (2012): 495-523.

The present invention provides a new use of phospholipase A1 to inhibit growth of Gram-negative bacteria (such as food-borne Gram-negative bacteria), yeasts and molds in a dairy product.

Phospholipase A1 can be used to inhibit coliform bacteria. Examples of food-borne Gram-negative bacteria include, but not limited to, *Aeromonas* spp. (e.g., *Aeromonas caviae, Aeromonas hydrophila, Aeromonas sobria), Campylobacter* spp. (e.g., *Campylobacter jejuni), Citrobacter* spp., *Salmonella* spp., *Shigella* spp., *Klebsiella* spp., *Enterobacter spp.* (e.g., *Escherichia coli,* including enteroinvasive, enteropathogenic and enterotoxigenic *Escherichia coli* as well as *Escherichia coli* 0157: H7, , O26:H11, O111:H⁻, O103:H2), *Plesiomonas shigelloides, Vibrio cholerae* and *Yersinia enterocolitica.*

"Inhibiting" generally means a decrease, whether partial or whole, in function and activity of cells or microorganisms. As used herein, the terms "to inhibit" or "inhibiting" in relation to bacteria, yeasts or molds mean that the growth, the number, or the concentration of the bacteria is the same or reduced. This can be measured by any methods known in the field of microbiology. Inhibition can be observed by comparing the growth, number or concentration to a reference value or a control. The control can be the same product prepared the same way but without the phospholipase treatment. The term "inhibiting" as used in the present invention also refers to delaying the growth of the microorganisms. The term "to delay" in general means the act of stopping, postponing, hindering, or causing something to occur more slowly than normal. As used herein, "delaying growth of bacteria, yeasts or molds" refers to the act of postponing the growth of bacteria, yeasts or molds. This can be observed by comparing the time needed for the microorganisms to grow to a given level in two products, one of which treated with phospholipase and the other one without (but otherwise the same).

The level of microorganism growth, including bacterial growth, can be evaluated using any conventional methods known in the art, for example using the methods described in US FDA's Bacteriological Analytical Manual (BAM), which presents the agency's preferred laboratory procedures for microbiological analyses of foods and cosmetics. For example, coliform analysis can be performed according to Feng, Peter, et al. "BAM: Enumeration of Escherichia coli and the Coliform Bacteria." Bacteriological analytical manual (2002): 13-19.

Another advantage of the present invention is the extension the shelf life of dairy products. As used herein, the term "shelf life" means the period of time that a food product remains sellable to retail customers. In fresh dairy processing, the shelf life of dairy products is about 30 to 40 days after preparation, sometimes even shorter, for example if raw milk is used as starting material.

### PRODUCTS

### Fresh milk

In one preferred embodiment, the dairy product of the use of the present application is fresh milk.

Since fresh milk is known to be susceptible for coliform contamination, it is possible to employ phospholipase A1 in milk to reduce the risk of contamination.

### Cheese products

In other preferred embodiments, the dairy product of the use of the present application is a cheese product, particularly a cheese product with short shelf life (e.g. shorter than 2 months). "Cheese product" is a term defined in accordance with relevant official regulations. The standards for such products are well known in the field.

The method as disclosed herein are especially applicable to cheese products with a pH which higher than 5.0 and/or a moisture content higher than 40%.

In preferred embodiments, the dairy product has a pH which is higher than 5.1 but lower than 7.0, such as higher than 5.2, such as higher than 5.3, such as higher than 5.4, such as higher than 5.5, such as higher than 5.6, such as higher than 5.7, such as higher than 5.8, such as higher than 5.9, such as higher than 6.0, such as higher than 6.1, such as higher than 6.2, such as higher than 6.3, such as higher than 6.4, such as higher than 6.5, such as higher than 6.6, such as higher than 6.7, such as higher than 6.8, such as higher than 6.9.

In preferred embodiments, the dairy product has a moisture content which is higher than 40%, such as higher than 41%, such as higher than 42%, such as higher than 43%, such as higher than 44%, such as higher than 45%, such as higher than 46%, such as higher than 47%, such as higher than 48%, such as higher than 49%, such as higher than 50%, such as higher than 51%, such as higher than 52%, such as higher than 53%, such as higher than 54%, such as higher than 55%, such as higher than 56%, such as higher than 57%, such as higher than 58%, such as higher than 59%, such as higher than 60%, such as higher than 61%, such as higher than 62%, such as higher than 63%, such as higher than 64%, such as higher than 65%, such as higher than 66%, such as higher than 67%, such as higher than 68%, such as higher than 69%, such as higher than 70%, such as higher than 71%, such as higher than 72%, such as higher than 73%, such as higher than 74%, such as higher than 75%, such as higher than 76%, such as higher than 77%, such as higher than 78%, such as higher than 79%, such as higher than 80%, such as higher than 90% or such as higher than 95%. Measuring of moisture content is well known and can be carried out by a skilled person in the art.

pH can be measured by any known methods in the art, such as pH probes, electrodes or meters.

In some preferred embodiments, the dairy product has a pH higher than 5.5 and a moisture content higher than 45%, such as higher than 50%, 55% or 60%

In some preferred embodiments, the dairy product has a pH higher than 6.0 and a moisture content higher than 45%, such as higher than 50%, 55% or 60%.

In some preferred embodiments, the dairy product has a pH higher than 6.5 and a moisture content higher than 45%, such as higher than 50%, 55% or 60%.

In some preferred embodiments, the dairy product has a pH higher than 6.7 and a moisture content higher than 45%, such as higher than 50%, 55% or 60%.

In some preferred embodiments, the dairy product has a pH between 5.5-6.8 and a moisture content between 45% to 80%.

In some preferred embodiments, the dairy product has a pH between 6.1-6.7 and a moisture content between 50% to 75%.

Such dairy products may be cheese products, such as fresh cheese products with or without starter culture added.

Preferably, the dairy product is a cheese product with pH higher than 6.0 and a moisture content higher than 50%. Near neutral pH and high moisture content in fresh, unripen cheese products are very susceptible to growth of microbial contamination by bacteria, yeasts or molds.

### Queso Fresco

In some preferred embodiments, the dairy product of the use of the present application is Queso Fresco. Queso Fresco is an unripen cheese originated from Latin American countries that is ready for consumption immediately or shortly after its manufacture. Other cheeses that are similar to Queso Fresco include minas frescal from Brazil, burgos from Spain, panela from Mexico, quesito from Colombia. A skilled person in the art can readily determine and identify these cheeses for example in accordance with regional regulations, such as Technical Regulations of Cheese Identity and Quality (Regulamento Técnico MERCOSUL de Identidade e Qualidade de Queijos).

### Coalho Cheese

In some preferred embodiments, the dairy product of the use of the present application is the Brazilian coalho cheese, also known as queijo de coalho. It is an artisanal cheese from northeastern Brazil, originally made from raw milk. Its consumption has spread throughout the country especially along the coast. It is a semi-hard cheese with medium to high moisture (such as 40-42%), with a semi-cooked or cooked mass and a fat content in the total solids varying from 35% to 60% (such as 40-46%). It is a firm, lightweight yellowish cheese with an elastic texture that is often sold on a stick and eaten roasted on spits. When roasted the cheese should not melt.

It has been discovered that coalho cheese treated with phospholipase has a higher pH compared to the untreated products. This has the surprising benefit that the product is less prone to melting when heated, making it suitable for consumption.

### Dairy products without starter culture

The invention is particularly useful for inhibiting growth of Gram-negative bacteria (such as coliforms), yeasts and mold in dairy products where no starter culture is added, for example cheese products where no starter culture is added. Due to the lack of starter culture and the high water content, such products have a higher risk for microbiological contamination. Phospholipase A1 can serve as a useful strategy to reduce contamination.

### Dairy dessert

In other preferred embodiments, the dairy products of the use of the present application include dessert cream (optionally with flavors such as caramel, chocolate, vanilla cream) or flan, as well as dairy desserts such as milk foam (optionally with chocolate, vanilla and other flavors), renneted milk dessert, custard or creme brulée.

### Methods

The present disclosure (not part of the present invention) provides methods of inhibiting growth of Gram-negative bacteria (such as coliform bacteria), yeasts and molds in a dairy product, comprising the step adding phospholipase A1 (EC 3.1.1.32) to a milk base.

### Milk Base

To prepare products in accordance with the use of the present application, a milk base is first provided as starting material. "Milk base" is broadly used in the present application to refer to a composition based on milk or milk components which can be used to prepare dairy products.

"Milk" generally refers to the lacteal secretion obtained by milking of any mammal, such as cows, sheep, goats, buffaloes or camels. Milk base can be obtained from any raw and/or processed milk material as well as from reconstituted milk powder. Milk base can also be plant-based, i.e. prepared from plant material e.g. soy milk, almond milk, cashew milk or coconut milk. Milk base prepared from milk or milk components from cows is preferred.

Milk base include, but are not limited to, solutions/suspensions of any milk or milk like products comprising protein, such as whole or low fat milk, skim milk, buttermilk, reconstituted milk powder, condensed milk and dried milk.

In some preferred embodiments, the milk base is raw milk (i.e. unpasteurized) obtained from cows, sheep, goats, buffaloes or camels. Raw milk is slightly acidic, typically in the range of pH 6.5 to 6.7 due to the presence of phosphate, citrate, and other buffering salts.

The present invention can be advantageously used to treat raw milk to manage microbial growth or prolong its shelf life, which allows management in production, especially when temporary storage is required or when the risk of contamination is high (for example, due to temperature issues, tank contamination, poor milk quality...etc.).

In addition, to produce many cheese which are to be labelled according to protected designation of origin, the law requires unpasteurized milk in the raw material. It would therefore be especially advantageous to use phospholipase A1 to manage growth of unwanted microorganisms in such products, since the use of pasteurization is limited.

In some preferred embodiments, milk base is pasteurized according to methods known in the art. Preferably, pasteurization is attained by maintaining a specified temperature for a specified period of time. Those of ordinary skill in the art are capable of selecting temperature and duration to kill or inactivate certain microorganisms. A rapid cooling step may follow.

In other preferred embodiments, the milk base is homogenized. Homogenization is a common procedure to give good texture to fermented milk products. It is performed to break up the milk fat into smaller sizes. Smaller fat globules created in this process can be easily suspended in solution so it does not exist as a separate layer from the milk. Homogenization can be accomplished for example by forcing the milk through a fine filter or restrictive valve at high pressures, thereby forming an emulsion with decreased particle size.

### Addition of phospholipase A1

According to preferred embodiments of the present invention, phospholipase A1 is added to a milk base under suitable conditions. If the milk should be pasteurized or homogenized, phospholipase A1 is added after pasteurization or homogenization.

Suitable conditions for performing the treatment of phospholipase can be determined by a skilled person using methods known in the art for optimizing enzymatic reactions. One may adjust various parameters such as the temperature and pH of the milk base and amount of phospholipase A1 of to achieve the desired results, taking into consideration the examples provided in this application as well as the properties desired of the product. Factors which can be considered include enzyme activity strength, fat content, reaction time, water activity, shelf life, storage conditions, packing, etc. The amounts can be determined by a skilled person in the art using routine experimentation.

The phospholipase can be added to the milk base at any temperature and then heating the milk to a temperature which is suitable for activating phospholipase. Suitable temperature ranges are known to a skilled person in the art or can be determined using routine experimentation.

For example, the phospholipase can be added to the milk in a tank or milk base at a temperature higher than 3°C, such as 3-12°C, and heated to a suitable temperature. In other embodiments, the phospholipase is added to the milk or milk base to a temperature of 30-55°C, such as 30-50°C, such as 31-45°C, such as 32-50°C, such as 35-43°C, such as 35-40°C.

The amount of phospholipase to be used in the invention may depend on the activity of the specific phospholipase on the phospholipids present under the specific treatment conditions. For instance, when a phospholipase A1 is used as shown in the example, the amount of phospholipase added may be between 0.1 and 50 LEU per gram of fat, such as between 0.5 and 25, between 1 and 10 LEU per gram of fat, or between 3 and 8 LEU per gram of fat.

The activity of a phospholipase can be determined as the rate of sodium hydroxide consumption during neutralization of the fatty acid. Such activity can be expressed in Lecitase units (LEU) relative to a Lecitase (phospholipase) standard. The procedures are known in the art. For example, phospholipase A1 activity may be measured relative to a phospholipase standard using lecithin as a substrate. Phospholipase A1 catalyzes the hydrolysis of lecithin to lyso-lecithin and a free fatty acid. The liberated fatty acid is titrated with 0.1 N sodium hydroxide under standard conditions (pH=8.0; 40° ±0.5). 1 LEU is defined as the amount of enzyme that under standard conditions (pH=8.0; 40° ±0.5) results in the same rate of sodium hydroxide consumption (in microeq/min) as the Lecitase standard diluted to a nominal activity of 1 LEU/g. The method can be carried out using either an automated system or standard laboratory equipment for carrying out titration experiments.

### Starter Culture

The invention is particularly useful for inhibiting growth of Gram-negative bacteria, yeasts and molds in dairy products where no starter culture is added. Such products may be unfermented products. However, it is also within the scope of the present application that dairy product may optionally be inoculated with starter cultures to obtain fermented products. Starter cultures, preferably lactic acid bacteria, can be used to ferment the milk base under controlled conditions, producing lactic acid from the sugars that are naturally present. Fermentation causes a decrease in pH and allows for flavors to develop. The term "starter" or "starter culture" as used in the present context refers to a culture of one or more food-grade microorganisms, particularly lactic acid bacteria, which are responsible for the acidification of the milk base. Starter cultures may be fresh, frozen or freeze-dried. It is within the skills of ordinary practitioners to determine the type starter culture and amounts to be used, depending on the desired dairy product to be produced.

### Coagulation

To make cheese product, coagulants are used to coagulate the milk base. A coagulant is an enzyme which is able to separate the milk into solid and liquid components. The resulting solid component is known as curd while the liquid component is called whey.

Methods of coagulation include contacting the milk with chymosin originating from the abomasum, of a calf or with a commercially available coagulant such as chymosin (EC 3.4.23.4). are well known in the art and commercially available, for example CHY-MAX^{®} or CHY-MAX^{®} M (Chr. Hansen A/S, Denmark).

Other useful coagulants may be the mucorpepsin microbial coagulant produced by fermentation using the fungus *Rhizomucor miehei,* which are commercially available as Hannilase^{®} or Microlant^{®} (Chr. Hansen A/S, Denmark).

After adding the coagulant and subjecting the milk base to a suitable condition, the coagulation process begins and continues for a period of time. A person of ordinary skill in the art can readily select suitable process conditions, such as the cheese type, temperature, oxygen, addition of carbohydrates, amount and characteristics of milk base and the processing time. This process may take from two, three, four, five, six hours or longer. Preferably, coagulation is carried out at 30 to 40°C, such as at 32 to 39°C, such as 34 to 38°C.

Once the milk is coagulated, the curd may be fermented until a predetermined pH (for example 6.4) is reached. It is subsequently separated from the whey and left to form into a mat. At this point, the mat is cut into sections and layered to expel more liquid. Fermentation continues in this layered form until the pH drops further, reaching for example pH 5.1 to 5.7. The curd is then salted or brined. Additional treatment may be performed based on the desired style of the cheese before the product is stored, aged, and packaged. It is preferred that the product is stored under cold temperature (below 15°C, such as below 10°C or below 6°C) to help extend shelf life.

In one preferred embodiment, the method comprises adding the phospholipase A1 available under the trademark YieldMAX^{®} or YieldMAX^{®}PL (Chr. Hansen A/S, Denmark), for example at a dosage of 5-10 LEU-P/g milk fat. The phospholipase A1 may be added to the milk base after milk pasteurization and during vat filling. It is preferred that the milk temperature is between 30°C - 40°C while the phospholipase is added. Then, the milk base is left of a period of time for enzymatic reaction, such as 5, 10, 15, 20, 25 or 30 minutes.

The following are steps may be used to make a Queso Fresco product in accordance with one embodiment of the present invention:
a) providing a milk base and pasteurizing the milk base,
b) adding phospholipase A1 to the milk base,
c) heating the milk base to a renneting temperature and adding coagulant at to obtain a curd,
d) cutting the curd,
e) removing whey,
f) adding water and stirring,
g) molding the curd,
h) cooling and brining the curd, and
i) packing the cheese.

The method may additionally comprise packing the dairy product to reduce contact with unwanted microorganisms.

Included in the present disclosure, but not claimed as such, are dairy products obtained by the methods described herein.

In some embodiments, the dairy products prepared using the methods described in the present disclosure has a coliform count of less than 10⁶cfu/g at day 21, 22, 23, 24, 25, 26, 27, 28, 29, 30, 31, 32,33, 34, 35, 36, 37, 38, 39, 40, 41, 42, 43, 44, 45, 46, 47, 48, 49, 50, 51, 52, 53, 54, 55, 56, 57, 58, 59 or day 60 when stored at a temperature between 1-6°C.

In some embodiments, the dairy products prepared using the methods described in the present disclosure has a coliform count of less than 10⁵ cfu/g at day 1, 2, 3, 4, 5, 6, 7, 8, 9, 10, 11, 12,13, 14, 15, 16, 17, 18, 19, 20, 21, 22, 23, 24, 25, 26, 27, 28, 29 or day 30 when stored at a temperature between 1-6°C.

In some embodiments, the dairy products prepared using the methods described in the present disclosure has a coliform count of less than 10⁴cfu/g at day 1, 2, 3, 4, 5, 6, 7, 8, 9, 10, 11, 12,13, 14, 15, 16, 17, 18, 19 or day 20 when stored at a temperature between 1-6°C.

In some embodiments, the dairy products prepared using the methods described in the present disclosure has a coliform count of less than 10³ cfu/g at day 1, 2, 3, 4, 5, 6, 7, 8, 9, 10, 11, 12,13, 14, 15, 16, 17, 18, 19 or day 20 when stored at a temperature between 1-6°C.

In some embodiments, the dairy products prepared using the methods described in the present disclosure has a coliform count of less than 10² cfu/g at day 1, 2, 3, 4, 5, 6, 7, 8, 9, 10, 11, 12,13, 14, 15, 16, 17, 18, 19 or day 20 when stored at a temperature between 1-6°C.

### EXAMPLES

### EXAMPLE 1 BIOPROTECTIVE EFFECT OF PHOSPHOLIPASE ON MINAS FRESCAL

### EXAMPLE 1.1

### Preparation of minas frescal cheese

The following steps were used to produce minas frescal cheese:
- pasteurizing milk high-temperature short-time (HTST) and standardizing with 3.0% fat and 3% protein,
- tank filling with milk at 34°C,
- adding phospholipase A1 (YieldMAX^{®}PL Chr. Hansen A/S, Denmark, at a dosage of 5 LEU/g fat),
- adding of calcium chloride, lactic acid and chlorophyll dye,
- heating up to 38-39°C until the end of the filling,
- adding coagulant (CHY-MAX^{®}M from Chr. Hansen A/S, Denmark),
- cutting the curd and resting for 10 minutes,
- stirring 35-45 minutes,
- molding into shapes and turning,
- cooling down,
- packing for storage.

Control cheese was prepared with the same steps but without the addition of phospholipase A1.

### Results - pH profile

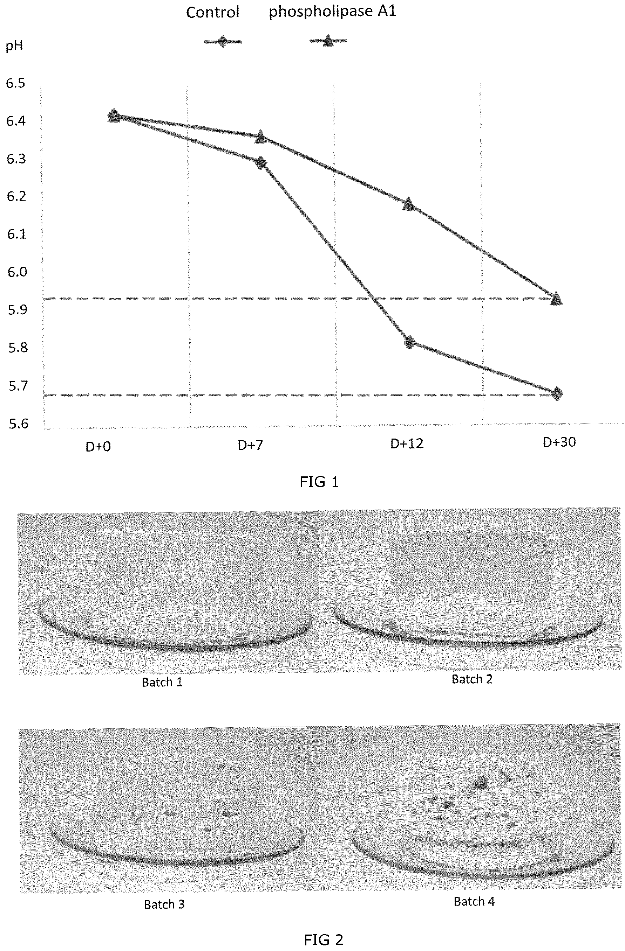

Figure 1 shows the acidification profile of the cheese samples treated with phospholipase A1 (tested cheese) and without phospholipase (control cheese). The pH of the cheeses on the day of manufacture was between 6.35 and 6.45. It can be seen from the figure that the control cheese exhibited a more rapid decrease in pH. This was due to the presence of contamination from bacteria, especially coliforms, that developed throughout the shelf-life. Coliforms not only lowered the pH rapidly but also generated enzymes and gases which modified the cheese flavor unfavorably. However, cheese treated with phospholipase has a slower decrease in pH. This difference in pH at the end of the shelf-life was found to be very noticeable to the consumers. This example demonstrates that the enzymatic treatment had a positive influence on improving the pH lowering profile and can be used to extend the shelf life.

### Results - sensory evaluation

The perception of freshness is another important factor very much appreciated by the consumers. To evaluate this, a bilateral, discriminatory sensorial analysis was conducted to find the "fresher" or "younger" sample between two cheese samples which are randomly coded. More specifically, two samples were presented to each evaluator: tested cheese (treated with phospholipase) and the control cheese (without phospholipase treatment) on the last day of the shelf-life (D+30).

It has been found that 90% of the evaluators identified the cheese treated with phospholipase as the fresher one (calculated statistical error 0.001%).

### Results - gas formation

Furthermore, less gas formation was observed in phospholipase-treated cheeses during shelf life. Figure 2 shows gas formation in the cheese treated with phospholipase (Batch 1 and 2) and without (Batch 3 and 4). All batches were made using milk with identical composition, stored in the same silo and manufactured in the same tanks.

It can be seen from the Figure 2 that no apparent holes were shown for enzyme-treated cheese (Batch 1 and 2). Sensorial test also did not show any strange flavors which developed during the shelf life. This demonstrates that phospholipase A1 is able to inhibit growth of gas-forming microorganisms.

### EXAMPLE 1.2

### Preparation of minas frescal cheese

The following steps were used to produce minas frescal cheese:
- pasteurizing milk HTST and standardizing with 2.80 % fat (Fat/Protein ratio = 0.93),
- tank filling with milk at 39°C,
- adding phospholipase A1 (YieldMAX^{®}PL Chr. Hansen A/S, Denmark, at a dosage of 5 LEU/g fat),
- adding calcium chloride and lactic acid (pH 6.45),
- adding coagulant (CHY-MAX^{®} M, Chr. Hansen A/S, Denmark),
- coagulating 30 minutes,
- cutting the curd and resting 2-3 minutes,
- stirring 18 minutes,
- salting in the curd (1.2% based on milk volume),
- molding into shapes and turning,
- cooling down,
- packing for storage.

Cheese products on day 22 and day 43 were evaluated with regard to pH, fat content, moisture content and coliform counts.

Fat content was determined by IDF method (International Dairy Federation) (1986) Cheese and Processed Cheese Product. Determination of Fat Content- Gravimetric Method (Reference Method). Standard FIL-IDF 5B: 1986. International Dairy Federation, Brussels, Belgium.

Moisture content was determined by IDF method (International Dairy Federation) (1982) Determination of the Total Solids Content of Cheese and Processed Cheese. Standard FIL-IDF 4A: 1982. International Dairy Federation, Brussels, Belgium.

Coliform count was determined by IDF method (International Dairy Federation) (1985) Enumeration of coliforms (milk & milk products) Standard FIL- 73A: 1985. International Dairy Federation, Brussels, Belgium.

Results are shown in in Table 1 below.

**Table 1**

| | Sample | pH | Fat | Moisture | Coliform cfu/g |
|---|---|---|---|---|---|
| Day 22 | Control | 5.34 | 20.5% | 56.4% | 1.7 x 10⁶ |
| | Treated | 5.40 | 20.0% | 58.4% | 1.2 x 10⁵ |
| Day 43 | Control | 5.28 | 20.5% | 53.9% | 1.1 x 10⁷ |
| | Treated | 5.44 | 20.0% | 58.2% | 9.2 x 10⁵ |

The sensorial evaluation also showed that the treated cheese samples kept its characteristics even at the end of shelf life. The control samples exhibited some unfavorable sensorial changes.

### EXAMPLE 1.3

### Preparation of minas frescal cheese

The following steps were used to produce minas frescal cheese:
- pasteurizing milk HTST and standardizing with 3.0% fat and 3% protein,
- tank filling with milk at 34°C,
- adding phospholipase A1 (YieldMAX^{®}PL, Chr. Hansen A/S, Denmark, at a dosage of 5 LEU/g fat),
- adding of calcium chloride, lactic acid and chlorophyll dye,
- heating up to 38-39°C until the end of the filling,
- adding coagulant (CHY-MAX^{®} M, Chr. Hansen A/S, Denmark),
- cutting the curd and resting for 10 minutes,
- stirring 35-45 minutes,
- molding into shapes and turning,
- cooling down,
- packing for storage.

The coliform counts were determined on day 9, 15, 20 and 30, using the same method as described in example 1.2. The results are shown in Table 2.

**Table 2**

| | Sample | Coliform cfu/g |
|---|---|---|
| Day 9 | Control | 2.8 x 10³ |
| | Treated | 1.3 x 10³ |
| Day 15 | Control | 6.3 x 10³ |
| | Treated | 5.8 x 10³ |
| Day 20 | Control | 1.8 x 10⁴ |
| | Treated | 6.6 x 10³ |
| Day 30 | Control | 6.6 x 10⁴ |
| | Treated | 7.4 x 10³ |

As can be seen from the table, the coliform growth was inhibited in cheese samples treated with phospholipase.

Sensorial evaluation showed that the cheeses exhibited remarkable difference in taste. The treated sample kept its characteristics until the end of shelf life, in contrast to the control cheese which had an unfavorable change in texture and taste.

### EXAMPLE 1.4

### Preparation of minas frescal cheese

The following steps were used to produce minas frescal cheese:
- pasteurizing milk HTST and standardizing with 2.50 % fat (fat/protein ratio = 0.81),
- tank filling with milk at 39°C,
- adding phospholipase A1 (YieldMAX^{®} PL, Chr. Hansen A/S, Denmark),
- adding calcium chloride and lactic acid (pH 6.45),
- adding coagulant (CHY-MAX^{®} M, Chr. Hansen A/S, Denmark),
- coagulating 18 minutes,
- cutting the curd and resting 2-3 minutes,
- stirring 15 minutes,
- molding into shapes and turning,
- salting at 20% brine,
- cooling down,
- packing for storage.

The coliform counts were determined on day 16 with the same method as described in example 1.2. Mold and yeast counts were measured by IDF method (International Dairy Federation) (1995) Enumeration of yeast & molds (milk & milk products) Standard FIL-IDF 94B: 1995. International Dairy Federation, Brussels, Belgium.

The results are shown in Table 3.

**Table 3**

| | Sample | pH | Fat | Moisture | Mold and Yeast cfu/g |
|---|---|---|---|---|---|
| Day 16 | Control | 4.82 | 16.5% | 61.8% | 2.4 x 10⁵ |
| | Treated | 4.89 | 15.0% | 66.8% | 6.0 x 10⁴ |

This example demonstrates that phospholipase A1 can be used for mold and yeast inhibition, even though the treated products exhibited higher moisture.

### EXAMPLE 2 BIOPROTECTIVE EFFECT OF PHOSPHOLIPASE ON OUESO FRESCO

### Preparation of Queso Fresco cheese

The following steps were used to produce Queso Fresco
- pasteurizing milk HTST and standardizing with 3.00% fat (fat/protein ratio = 0.93),
- tank filling with milk at 40°C,
- adding phospholipase A1 (YieldMAX^{®} PL, Chr. Hansen A/S, Denmark at 5 LEU/g of milk fat),
- adding calcium chloride and lactic acid (pH 6.45),
- adding coagulant (CHY-MAX^{®} M, Chr. Hansen A/S, Denmark),
- coagulating 30 minutes,
- cutting the curd and resting 2-3 minutes,
- stirring 20 minutes,
- molding into shapes and turning,
- salting at 20% brine,
- cooling down,
- packing for storaging.

### Results - acidification profile

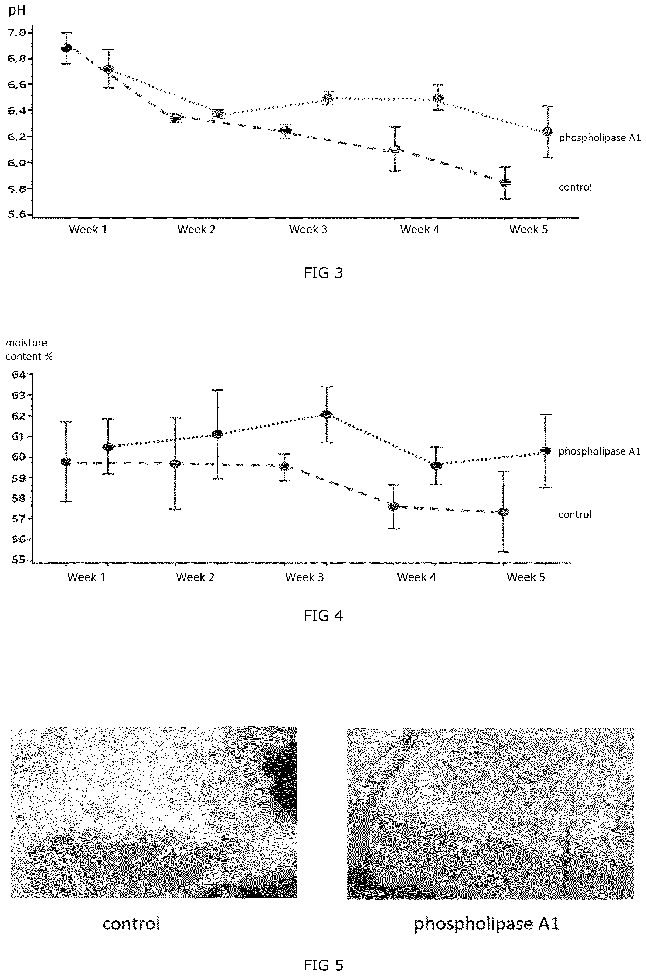

The normal shelf life for Queso Fresco is about 4 weeks. The pH of cheese treated with phospholipase and control cheese was measured weekly for a period of 5 weeks. The results are shown in the interval plot in Figure 3 (CI 95% for the mean). Since no starter cultures were used when making Queso Fresco, the products had high pH during shelf life (pH about 6.6-6.9 in week 1). It can be clearly seen that the pH of treated cheese (dotted) was constantly higher than the control cheese (dashed) throughout the shelf life. This demonstrates that phospholipase can keep the pH value high and prolong the shelf life.

### Results - moisture content

Queso Fresco is a cheese with high moisture, normally around 60%. The moisture content of both treated cheese and control cheese were measured by IDF method (International Dairy Federation) (1982) Determination of the Total Solids Content of Cheese and Processed Cheese. Standard FIL-IDF 4A: 1982. International Dairy Federation, Brussels, Belgium.

The results are shown in the interval plot in Figure 4 (CI 95% for the mean). The moisture content in Queso Fresco treated with phospholipase A1 was higher than control cheese during the period of 5 weeks. This demonstrates that phospholipase can keep the moisture content high.

Reduction in moisture content is an indication of wheying-off in the package and changes in the cheese texture, something not valued by the consumers. Figure 5 shows the appearance of both cheese samples. Cheese treated with the enzyme exhibited less wheying-off and had more nicer appearance which is preferred by the consumer.

### Results - coliform counts

Coliform counts for both cheese samples were measured every week during 5 weeks by IDF method (International Dairy Federation) (1985) Enumeration of coliforms (milk & milk products) Standard FIL-IDF 73A: 1985. International Dairy Federation, Brussels, Belgium.

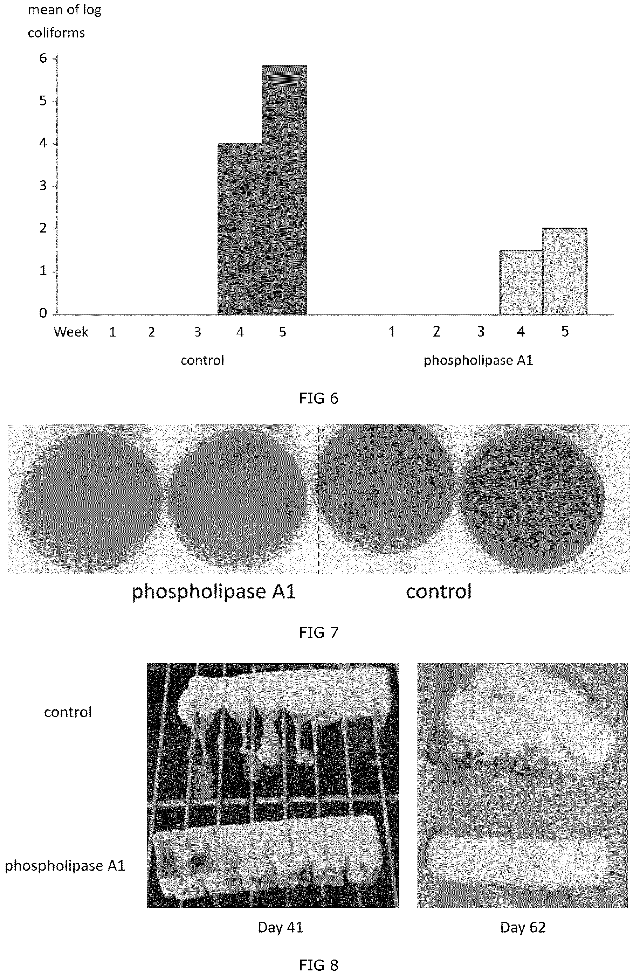

Figure 6 shows the mean log of coliforms in cheese treated with (right) and without (left) phospholipase. A clear inhibition can be seen in the treated cheese.

In addition, both cheese samples from week 4 were tested for presence of coliforms on plates, determined by IDF method (International Dairy Federation) (1985) Enumeration of coliforms (milk & milk products) Standard FIL-IDF 73A: 1985. International Dairy Federation, Brussels, Belgium.

Figure 7 shows the coliform count plates for Queso Fresco treated with phospholipase (left) and without (right) (2 replicates each). Each black point indicates a coliform colony. There is clearly reduction of coliform formation in Queso Fresco treated with phospholipase.

### EXAMPLE 3 BIOPROTECTIVE EFFECT OF PHOSPHOLIPASE ON COALHO CHEESE

### EXAMPLE 3.1

### Preparation of coalho cheese

The following steps were used to produce coalho cheese
- pasteurizing milk HTST and standardizing with 3.2% fat (fat/protein ratio 1.0),
- tank filling with milk at 34°C,
- adding phospholipase A1 (YieldMAX^{®} PL, Chr. Hansen A/S, Denmark),
- adding calcium chloride (20g/100 L cheese milk),
- adding coagulant (28 IMCU/L) and coagulating about 30 minutes,
- cutting the curd into 5-7 mm cubes,
- stirring 20 minutes,
- scalding at 42°C (1°C/1.5 minutes),
- stirring 45-50 minutes,
- draining,
- salting (1 to 2% of initial milk volume),
- pre-pressing (20 minutes),
- molding into shapes and turning,
- pressing at 4 - 6 kg/cm² for 1.5-2 hours,
- packing for storage.

### Results - pH, moisture content and coliform counts

pH, moisture content and coliform counts of the cheese samples were measured at day 41 and 62.

Moisture content was determined by IDF method (International Dairy Federation) (1982) Determination of the Total Solids Content of Cheese and Processed Cheese. Standard FIL-IDF 4A: 1982. International Dairy Federation, Brussels, Belgium.

Coliforms were determined by IDF method (International Dairy Federation) (1985) Enumeration of coliforms (milk & milk products) Standard FIL-IDF 73A: 1985. International Dairy Federation, Brussels, Belgium.

The table below shows the total of coliforms, moisture and pH of the cheese samples.

**Table 4**

| | Sample | pH | Moisture | Coliform cfu/g |
|---|---|---|---|---|
| Day 41 | Control | 5.66 | 47.9% | 1.2 x 10⁷ |
| | Treated | 6.35 | 49.3% | 6.0 x 10² |
| Day 62 | Control | 5.51 | 47.9% | 7.2 x 10⁷ |
| | Treated | 6.19 | 48.2% | 4.0 x 10⁵ |

### Results - melting tests

The pH of the product has the effect on whether the product would melt when heated. Both coalho cheese samples from day 41 (left) and day 62 (right) were tested on heated grill. As shown in Figure 8, in both trials, the enzyme-treated cheese (bottom) did not melt, in contrast to control cheese (top).

### EXAMPLE 3.2

### Preparation of coalho cheese

The following steps were used to produce coalho cheese:
- pasteurizing milk HTST and standardizing with 3.2% fat (fat/protein ratio 1.0),
- tank filling with milk at 34°C,
- adding phospholipase A1 (YieldMAX^{®} PL, Chr. Hansen A/S, Denmark),
- adding calcium chloride (20g/100 L cheese milk),
- adding coagulant (28 IMCU/L) and coagulating about 30 minutes,
- cutting the curd into 5-7 mm cubes,
- stirring 20 minutes,
- scalding at 42°C (1°C/1.5 minutes),
- stirring 45-50 minutes,
- draining,
- salting (1 to 2% of initial milk volume),
- pre-pressing (20 minutes),
- molding into shapes and turning,
- pressing at 4 - 6 kg/cm2 for 1.5-2 hours,
- packing for storage.

### Results- pH, fat, moisture content and coliform counts

pH, fat, moisture content and coliform counts of the cheese samples were measured at day 6, 27 and 63 using methods as described in Example 1.2.

The table below shows the total of coliforms, moisture, fat and pH of the cheese samples. For day 6, the coliform counts for both control and treated samples cannot be calculated due to insufficient dilution. However, lower coliform density can be visually observed for the treated sample.

**Table 5**

| | Sample | pH | Fat | Moisture | Coliform cfu/g |
|---|---|---|---|---|---|
| Day 6 | Control | 6.13 | 29.0 | 46.6 | > 3.0 x 10⁴ |
| | Treated | 6.19 | 31.0 | 45.0 | > 3.0 x 10⁴ |
| Day 27 | Control | NA | NA | 46.3 | 1.3 x 10⁶ |
| | Treated | NA | NA | 46.0 | 4.2 x 10⁵ |
| Day 63 | Control | 5.07 | 29.0 | NA | 1.9 x 10⁶ |
| | Treated | 5.60 | 30.0 | NA | 6.2 x 10⁵ |

This example demonstrates that phospholipase can be used in preparing coalho cheese to inhibit coliform growth.

## Claims

1. Use of phospholipase A1 (EC 3.1.1.32) to inhibit growth of Gram-negative bacteria, preferably coliform bacteria, yeasts and/or molds in a dairy product.

2. The use according to claim 1, wherein phospholipase A1 (EC 3.1.1.32) is added to a milk base to prepare the dairy product.

3. The use according to any one of claims 1-2, wherein the dairy product does not comprise starter cultures added to the milk base.

4. The use according to any one of claims 1-3, wherein the dairy product has a pH which is higher than 5.0, preferably 5.1, 5.2, 5.3, 5.4, 5.5, 5.6, 5.7, 5.8, 5.9, 6.0, 6.1, 6.2, 6.3, 6.4, 6.5, 6.6, 6.7, 6.8 or 6.9.

5. The use according to any one of claims 1-4, wherein the dairy product has a moisture content which is higher than 40%, preferably higher than 50%, such as 40-90%, 42-80%, 45-70%, 50-65% or 55-60%.

6. The use according to any one of claims 1-5, wherein the dairy product is a cheese product, preferably cheese product prepared from raw milk.

7. The use according to any one of claims 1-6, wherein the dairy product is Queso Fresco, minas frescal, burgos, panela, quesito or coalho cheese.

## Patentansprüche

1. Verwendung von Phospholipase A1 (EC 3.1.1.32) zur Hemmung des Wachstums von gramnegativen Bakterien, vorzugsweise coliformen Bakterien, Hefen und/oder Schimmelpilzen in einem Milchprodukt.

2. Verwendung gemäß Anspruch 1, wobei Phospholipase A1 (EC 3.1.1.32) einer Milchbasis zugesetzt wird, um das Milchprodukt herzustellen.

3. Verwendung gemäß einem der Ansprüche 1 bis 2, wobei das Milchprodukt keine der Milchbasis zugesetzten Starterkulturen enthält.

4. Verwendung gemäß einem der Ansprüche 1 bis 3, wobei das Milchprodukt einen pH-Wert von mehr als 5,0, vorzugsweise 5,1, 5,2, 5,3, 5,4, 5,5, 5,6, 5,7, 5,8, 5,9, 6,0, 6,1, 6,2, 6,3, 6,4, 6,5, 6,6, 6,7, 6,8 oder 6,9.

5. Die Verwendung gemäß einem der Ansprüche 1 bis 4, wobei das Milchprodukt einen Feuchtigkeitsgehalt von mehr als 40 %, vorzugsweise mehr als 50 %, aufweist, beispielsweise 40 bis 90 %, 42 bis 80 %, 45 bis 70 %, 50 bis 65 % oder 55 bis 60 %**.**

6. Verwendung gemäß einem der Ansprüche 1 bis 5, wobei das Milchprodukt ein Käseprodukt ist, vorzugsweise ein aus Rohmilch hergestelltes Käseprodukt.

7. Verwendung gemäß einem der Ansprüche 1 bis 6, wobei das Milchprodukt Queso Fresco, Minas Frescal, Burgos, Panela, Quesito oder Coalho-Käse ist**.**

## Revendications

1. Utilisation de la phospholipase A1 (EC 3.1.1.32) pour inhiber la croissance de bactéries Gram-négatives, de préférence de bactéries coliformes, de levures et/ou de moisissures dans un produit laitier.

2. Utilisation selon la revendication 1, dans laquelle la phospholipase A1 (EC 3.1.1.32) est ajoutée à une base de lait pour préparer le produit laitier.

3. Utilisation selon l'une quelconque des revendications 1 à 2, dans laquelle le produit laitier ne comprend pas de cultures de démarrage ajoutées à la base de lait.

4. Utilisation selon l'une quelconque des revendications 1 à 3, dans laquelle le produit laitier présente un pH supérieur à 5,0, de préférence 5,1, 5,2, 5,3, 5,4, 5,5, 5,6, 5,7, 5,8, 5,9, 6,0, 6,1, 6,2, 6,3, 6,4, 6,5, 6,6, 6,7, 6,8 ou 6,9.

5. Utilisation selon l'une quelconque des revendications 1 à 4, dans laquelle le produit laitier présente une teneur en humidité supérieure à 40 %, de préférence supérieure à 50 %, telle que 40 à 90 %, 42 à 80 %, 45 à 70 %, 50 à 65 % ou 55 à 60 %.

6. Utilisation selon l'une quelconque des revendications 1 à 5, dans laquelle le produit laitier est un produit fromager, de préférence un produit fromager préparé à partir de lait cru.

7. Utilisation selon l'une quelconque des revendications 1 à 6, dans laquelle le produit laitier est du fromage Queso Fresco, Minas Frescal, Burgos, Panela, Quesito ou Coalho.
